# EUROPÄISCHE PATENTSCHRIFT

(11) **EP 3 689 885 B1**
(45) Veröffentlichungstag und Bekanntmachung des Hinweises auf die Patenterteilung: **09.03.2022**
(21) Anmeldenummer: 20154620.7
(22) Anmeldetag: 30.01.2020
(51) Int. Cl.: C07F 9/24, C05G 3/90

(54) **HOCHWIRKSAME KONZENTRATE MIT PPDA UND DEREN VERWENDUNG ZUR STABILISIERUNG DER WERTSTOFFE IN TIEREXKREMENTEN**
HIGHLY EFFECTIVE CONCENTRATES WITH PPDA AND THEIR USE IN STABILIZING MATERIALS IN ANIMAL EXCREMENTS
CONCENTRÉS HAUTEMENT EFFICACES AVEC DU PPDA ET LEUR UTILISATION POUR STABILISER DES MATIÈRES VALORISABLES DANS DES EXCRÉMENTS ANIMAUX

(30) Priorität: 30.01.2019 DE 102019201159
(43) Veröffentlichungstag der Anmeldung: 05.08.2020
(73) Patentinhaber: SKW STICKSTOFFWERKE PIESTERITZ GmbH, 06886 Lutherstadt Wittenberg (DE)
(72) Erfinder: Bender, Christoph, 10249 Berlin (DE); Radics, Ute, 06901 Kemberg (DE); Schuster, Carola, 06886 Wittenberg (DE); Hucke, Andre, 06886 Wittenberg (DE)
(74) Vertreter: Grünecker Patent- und Rechtsanwälte PartG mbB

(56) Entgegenhaltungen:
- DD-A3- 122 177
- DE-A1-102013 012 760

## Beschreibung

Die vorliegende Erfindung betrifft hochwirksame Konzentrate mit Phenylphosphorsäurediamid (PPDA) und deren Verwendung zur Stabilisierung der Wertstoffe in Tierexkrementen

### Stand der Technik

Aus Tierhaltungsanlagen wird eine Vielzahl verschiedener luftverunreinigender Stoffe freigesetzt. Hinsichtlich ihrer Umweltwirkung sind Emissionen von Gerüchen, Ammoniak, Staub (Partikeln) sowie von klimawirkrelevanten Gasen Methan und Distickstoffmonoxid (Lachgas) die wichtigsten. Eine besondere Bedeutung kommt hierbei den Ammoniakemissionen zu, da 86 % der in der Landwirtschaft entstehenden Emissionen auf Tierhaltung (größtenteils aus der Rindviehhaltung) und Wirtschaftsdüngermanagement entfallen. Damit liegen hier auch die größten Reduktionspotentiale, um die Verpflichtungen laut Richtlinie (EU) 2016/2284 über die Reduktion der nationalen Emissionen bestimmter Luftschadstoffe zur Minderung der Ammoniakemissionen in Deutschland gesichert einzuhalten. Der in den tierischen Exkrementen enthaltene Harnstoff wird enzymatisch rasch unter Bildung von Ammoniak gespalten. Bereits die kurze Verweilzeit der Exkremente in den Stallanlagen reicht aus, um Ammoniakmengen zu bilden, die zu einer schädlichen Belastung sowohl der Stallluft als auch der Umwelt führen. Der Ammoniakgehalt der Stallluft beeinträchtigt die Gesundheit und Leistungsfähigkeit der Tierbestände und wirkt sich negativ auf die Milchleistung und die Gewichtszunahme der Tiere aus. Alle bekannten technischen Lösungen senken den Ammoniakgehalt der Stallluft durch eine entsprechende Frischluftzufuhr. Hierzu sind aufwendige Lüftungseinrichtungen erforderlich. Nachteilig ist neben den hohen Installationskosten derartiger Anlagen der hohe Energieverbrauch bei deren Betreiben. Ein weiterer Nachteil besteht darin, dass bei hohen bzw. niedrigen Außentemperaturen die zugeführte Frischluft temperiert werden muss, was wiederum Energie- und Anlagenkosten verursacht. In Ställen ohne Lüftungs- und Klimaanlagen sind die Tiere den leistungsmindernden Einflüssen des Ammoniaks ausgesetzt. Weiterhin werden mit diesen Maßnahmen die Emissionen an sich nicht reduziert, sondern nur verteilt. Bei einigen Tierhaltungssystemen werden ausgehend vom Aspekt des Tierwohls freibelüftete Tierställe gefordert. In diesen ist eine technische Möglichkeit der Minderung von Ammoniak in der Umgebungsluft und des weiteren Transfers nicht gegeben. Es sind aber für die Tierhaltung verschiedene Minderungsmaßnahmen für Ammoniakemissionen bekannt, wovon zur Einordnung der Erfindung im Nachfolgenden nicht abschließend einige genannt werden sollen.

Es ist aus CN 108633831 bekannt, dass Öle aus Sternanis, Fenchel, Piniennadeln und Zimt, verfüttert in Hähnchenmastanlagen, die Ammoniakemissionen effektiv reduzieren können.

Es ist weiterhin aus CN 108611301 bekannt, dass die Verwendung von aeroben und anaeroben mikrobiellen Agentien als biologisches Deodorant die Ammoniakemissionen signifikant reduzieren können.

In CN 108497173 wird über ein Futteradditiv, bestehend unter anderem aus Montmorillonit, Yuccapalmenextrakten und Zeolithpulvern zur Senkung der Ammoniakemissionen in Tierställen berichtet.

In CN 108275818 wird über ein System zur schnellen Rückgewinnung von Ammoniakstickstoff aus Tierstallabwässern mit hohem Ammoniakstickstoff-Viehgehalt berichtet.

Cabeza et al. berichten in Animal Feed Science and Technology (2018), 237, 1-7 über die Mitverfütterung von Pflanzenkohle zur Senkung der Ammoniakemissionen.

In CN 107324850 wird über die Zugabe von Säure zur Fixierung und Zurückhaltung von Ammoniak in Hühnerställen berichtet.

Sommer et al. berichten im Journal of Environmental Quality (2017), 46(3), 514-521 über die Zugabe von Schwefelsäure zu Rindergülle zur Reduzierung der Emission von Klimagasen und von Ammoniak.

Weiterhin sind die in der folgenden Tabelle genannten Minderungsmaßnahmen bekannt.

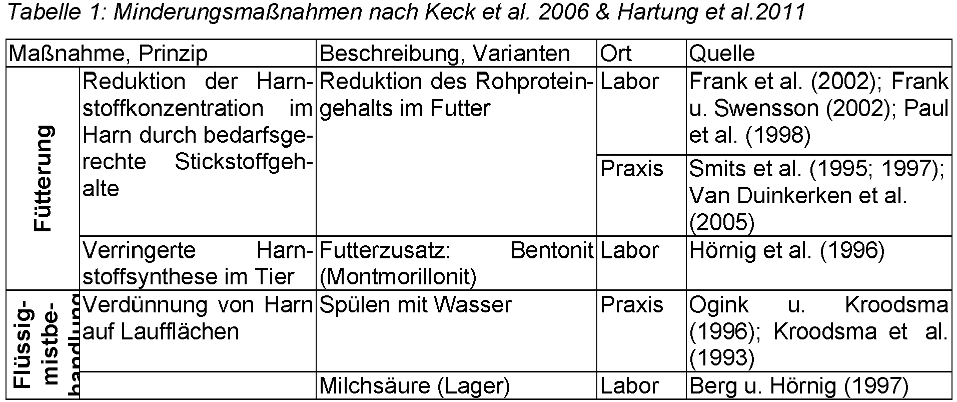

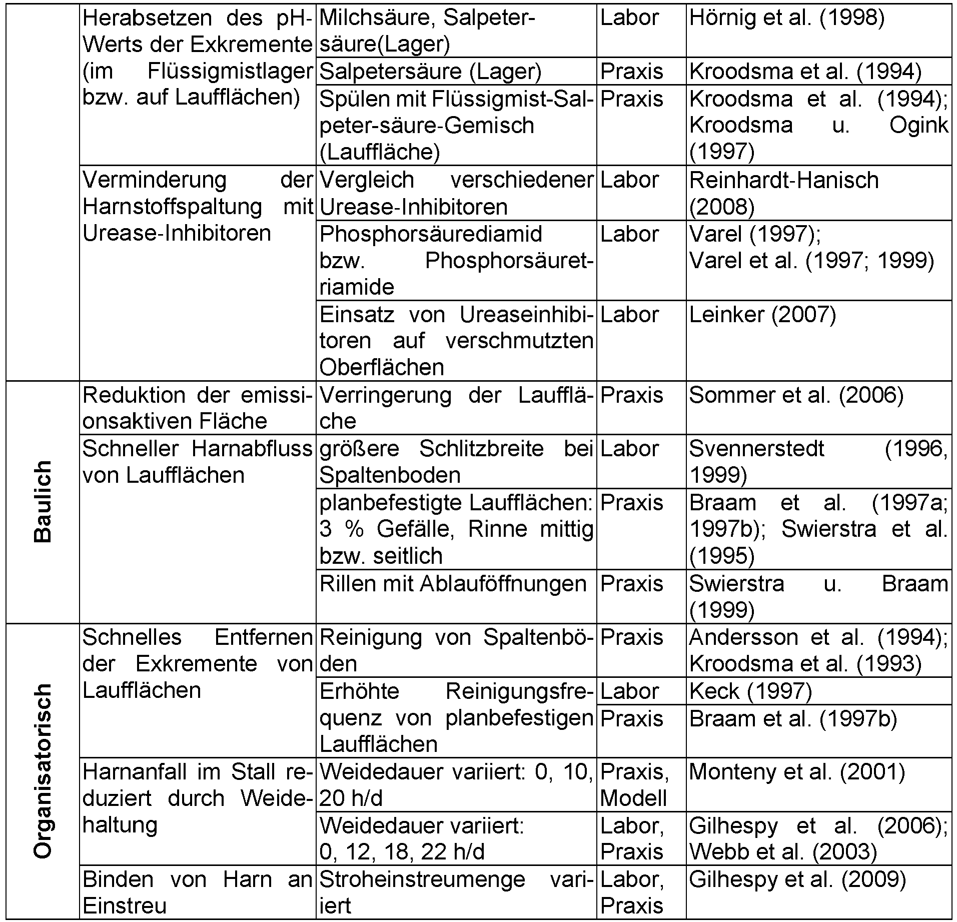

Literatur:
Hartung, E. Schrade, S., Keck, M., 2011: Emissionsminderungsmaßnahmen in der Rinderhaltung.
In: Emissionen der Tierhaltung. Treibhausgase, Umweltbewertung, Stand der Technik. KTBL-Schrift 491, 256-269
Keck M., Schrade S., Zähner M., 2006: Minderungsmaßnahmen in der Milchviehhaltung. In: Emissionen der Tierhaltung. Messung, Beurteilung und Minderung von Gasen, Stäuben und Keimen.
Band KTBL-Schrift 449. 211-227.

In der EP1183220 werden neue Mittel, die zur Verbesserung der Stickstoff-Ausnutzung von harnstoffbasierten mineralischen und/oder organischen Düngemitteln führen können, beschrieben. Sie enthalten eine Ureaseinhibitor und einen Nitrifikationsinhibitor und sollen auch organischen Düngern, wie beispielsweise Gülle, bereits während der Lagerung zugesetzt werden können, um dadurch zur Senkung der Ammoniakbelastung in Tierställen beizutragen. Es wird aber lediglich in der Beschreibung erwähnt, dass sie in Güllelagertanks eingebracht werden können, für die direkte Ausbringung im Stall wird keine Lösung vorgeschlagen.

Aus WO 2017083818 ist bekannt, dass N-(*n*-Butyl)-thiophosphoräuretriamid zu Gülle zugegeben werden kann, um die Nährstoffe vor Verlust zu schützen. Der Ureaseinhibitor wird aber erst zu der Gülle im Tank gegeben. Zu diesem Zeitpunkt sind jedoch schon hohe Ammoniakverluste im Stall zu verzeichnen.

Aus Applied Engineering in Agriculture Vol. 32(6): 823-832 (2016) ist bekannt, dass N-(*n*-Butyl)-thiophosphoräuretriamid, angewandt auf Rinderfutterplätzen unter freiem Himmel, die Ammoniakemissionen effizient senken kann. Der Ureaseinhibitor wird aber hier in hohen Dosen (mindestens 100 mg/m²·7d) ausgebracht und muss unmittelbar vor der Anwendung als Feststoff in Wasser aufgelöst werden.

Aus WO 2016014019 ist bekannt, dass Ureaseinhibitoren generell als Futterzusatzstoffe in der Rinderhaltung die Ammoniakemissionen senken können. Die Verfütterung von Wirkstoffen greift aber natürlich nicht unerheblich in die Verdauungsprozesse der Tiere ein und ist zusätzlich mit aufwendigen Zulassungsverfahren verknüpft.

In Heilongjiang Xumu Shouyi (2014), (20), 42-44 wird der Einsatz von Ureaseinhibitoren in der Milchviehzucht diskutiert. Es wird die Gabe von PPDA zur Futterration empfohlen, dieses Verfahren besitzt somit die gleichen Nachteile wie die oben genannten.

In CN 101366448 wird ein ansäuerndes Mittel, enthaltend unter anderem PPDA, zur Fütterung an Schweine beschrieben.

Aus Science of the Total Environment (2013), 465, 136-146 ist bekannt, dass der Zusatz von N-(*n*-Butyl)-thiophosphoräuretriamid von zu Harnstoffdüngern oder Tiergülle die Ammoniakemissionen deutlich reduzieren können. Jedoch ist zu diesem Zeitpunkt schon ein wesentlicher Teil des wertvollen Harnstoff-Stickstoffs bei der Lagerung der Gülle verloren gegangen.

In Journal of Applied Poultry Research (2009), 18(1), 34-42 wird über die Anwendung von N-(*n*-Butyl)-thiophosphoräuretriamid in Geflügelfarmen berichtetet, um die Ammoniakkonzentration effektiv zu senken.

In Nongye Huanjing Kexue Xuebao (2006), 25(1), 132-136 wird über die Zugabe von Ureaseinhibitoren, namentlich PPDA, Cyclohexylphosphorsäuretriamid und N-(n-butyl)-thiophosphorsäuretriamid zu Schweinegülle zur effektiven N-Ausnutzung berichtet. Auch hier erfolgt die Zugabe erst in die Gülletanks, so dass schon vorher wertvolle Nährstoffe verloren gegangen sind.

Varel et al. berichten in Journal of Environmental Quality (2007), 36(3), 773-779 über die Zugabe von Thymol und N-(*n*-Butyl)-thiophosphoräuretriamid zur Schweinegülle. Auch hier erfolgt die Zugaben erst in den Gülletank.

Ebenso wird in Journal of Environmental Quality (2005), 34(3), 1119-1130 über die Beifügung von N-(*n*-Butyl)-thiophosphoräuretriamid zur Schweinegülle berichtet. Wie bereits mehrfach erwähnt, wird auch hier die Zugabe erst im Gülletank realisiert.

In EP0408199 wird über die Anwendung von PPDA auf die eingestreuten Liegebereiche von Tieren berichtet. Zum einen wird hier eine frisch hergestellte Lösung von PPDA in Wasser verwendet, die nicht lange aufbewahrt werden kann, da PPDA in Wasser nicht stabil ist. Zum anderen kommt es besonders bei Rindern und Schweinen eben eher selten zum Abkoten und Abharnen in den Liegebereichen, sondern vorzugsweise auf den Laufflächen.

In Journal of Animal Science (1999), 77(5), 1162-8 diskutieren Varel et al. die Verwendung von Ureaseinhibitoren. Hier werden die Wirkstoffe im Stall ausgebracht, nicht praxistauglich ist jedoch das umständliche, direkte Auflösend der Wirkstoffe Cyclohexylphosphorsäuretriamid und N-(n-Butyl)-thiophosphorsäuretriamid unmittelbar vor der Ausbringung. Die extrem hohen Wirkstoffmengen (2 - 5 g/m²) sind nicht akzeptabel.

In der WO2010072184 wird eine flüssige Zusammensetzung, enthaltend Phosphorsäure- oder Thiophosphorsäuretriamidderivate und geeignete Lösungsmittel, beschrieben. Die Erfindung umfasst ferner die Verwendung dieser flüssigen Zusammensetzung als UreaseInhibitor in Harnstoff enthaltenden Düngemitteln, in Düngemitteln und Abfällen tierischen Ursprungs oder in Sprays, die tierische Uringerüche maskieren. Diese letzten beiden Anwendungen werden aber lediglich in der Beschreibung erwähnt und sind durch keine Anwendungsdaten belegt.

In der WO2015031998 wird ein geruchshemmendes Material für Tierstreu, das aus der Verwendung eines geruchshemmenden Mittels einschließlich Phosphorsäuretriamiden in Pulverform und einem verwandten Herstellungsverfahren stammt, beansprucht.

In der WO2015020967 werden Lösungen von N-(n-Butyl)thiophosphorsäuretriamid (NBPT) in einem oder mehreren N-substituierten Morpholinen und Gemischen davon beansprucht, die auch den Geruch von tierischen Abfällen oder Urin zu verringern in der Lage sind.

In der WO2011134074 wird ein Staub- und Geruchsbekämpfungsmaterial umfasst ein Substrat, ein mit dem Substrat verbundenes geruchsneutralisierendes und staubkontrollierendes Mittel und ein mit dem Substrat verbundenes geruchshemmendes Mittel beansprucht. Das Tierstreumaterial kann ein Substrat auf Bentonitbasis, N-(n-Butyl)thiophosphorsäuretriamid (nBTPT) und MgCl₂ umfassen.

In der WO 2005030247 wird darüber berichtet, dass u.a. N-(n-Butyl)thiophosphorsäuretriamid (nBTPT) Schafen in den Labmagen gegeben wurde, um die Zusammensetzung des Urins zu ändern.

DD241012 offenbart die Verwendung von PPDA, um die Bildung von Ammoniak aus tierischen Abfällen im Stall zu verhindern. Die Verwendung dieser festen Verbindung in Ställen wird entweder allein oder in Kombination mit Desinfektionsmitteln oder Reinigungsmitteln vorgeschlagen, ohne eine konkrete technische Lösung anzubieten. Es werden bis zu 200 mg PPDA pro m² Stallfläche als Aufwandmenge angegeben. Zusätzliche Arbeiten (Wenzel, K.-D., et al., Zeitschrift für Chemie 1983, 23, 369-373) haben die Wirksamkeit von PPDA als Urease-Inhibitor mit mittlerer Wirkungsstärke bestätigt.

In Untersuchungen von Leinker (Dissertation, Martin-Luther Universität Halle-Wittenberg, Halle/Saale, 2007) wurde ermittelt, dass für gut wirkende Ureaseinhibitoren eine Wirkstoffaufgabe von 2,5 mg pro m² Stallfläche am Tag ausreichend ist. Eine technische Umsetzung der Modellversuche erfolgte jedoch nicht. PPDA wird aufgrund seiner leichten Hydrolisierbarkeit und die im Laborscreening ermittelte nur mittlere Wirksamkeit als "ohne praktische Bedeutung" dargestellt.

Die DD 122177 beschreibt Mittel zur Minderung des Verlustes an pflanzenverfügbarem Stickstoff in Kulturböden. Dabei wird ein Mittel, das die enzymatische Spaltung von Harnstoff inhibiert, eingesetzt. Als Mittel werden Phosphorsäureesteramide eingesetzt.

### Gegenstand der Erfindung

Es bestand die Aufgabe, eine Formulierung mit einem Ureaseinhibitor zu finden, mit der im Stall möglichst wenig Wirkstoff aufgebracht werden muss, die sich einfach handhaben lässt und die eine ausreichende Stickstoffstabilisierung von Flüssigmist/Gülle sowie eine sehr gute Minderung der Ammoniakemissionen garantiert. Weiterhin sollte diese Formulierung garantieren, dass in ihr sowohl der ureaseinhibierende Wirkstoff stabil ist und nicht abgebaut wird, als auch die Zusammensetzung sich in ihrem Erscheinungsbild nicht verändert und sich die Suspension nicht stark absetzen.

### Beschreibung der Erfindung

Die Ausbringung von Ammoniakemissionen-reduzierenden Mitteln muss nach dem bekannten Stand der Technik direkt im Stall erfolgen, da hier sofort nach dem Abharnen und Abkoten der Tiere die Harnstoffhydrolyse in den Exkrementen beginnt und nur so effektiv eine Ammoniakminderung erzielt und ein Erhalt der wertvollen Inhaltstoffe in Flüssigmist/Gülle realisiert werden kann.

Diese Aufgabe wird erfindungsgemäß durch die Bereitstellung einer flüssigen Zusammensetzung gelöst, enthaltend PPDA mit der angegebenen Struktur, 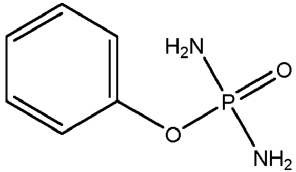 einschließlich Salze, Tautomere, Polymorphe und Metallkomplexe von Verbindungen der angegebenen Formel, die ureaseinhibierende Wirkung haben; mindestens ein Dispersionsmedium, ausgewählt unter:
a) Pflanzenölen,
b) Fettsäurealkylestern,
c) einem oder mehreren Lösungsmittel(n), ausgewählt aus den folgenden: Dimethylsulfoxid, Pyrrolidin-2-on, Glycerinformal, Ethylenglykole und ihre Mono-/Diether, Propylenglykole und ihre

### Mono-/Diether,

sowie eine oder mehrere aus der folgenden Gruppe ausgewählte Komponente(n): Paraffinöle, Wachse, Tenside, Emulgatoren, ein oder mehrere suspensionsstabilisierende Mittel, wobei das suspensionsstabilisierende Mittel ausgewählt ist aus der Gruppe bestehend aus Polyvinylalkoholen, Polyvinylpyrrolidonen, Xanthan, Dextran, Tylose, Carboxymethylcellulose, Ethylcellulose, Methylcellulose, Hydroxyethylcellulose, Hydroxyethylmethylcellulose und Methylethylcellulose, wobei das Phenylphosphorsäurediamid in einer Menge von 0,5-30 Gew.-%, das oder die Öle und/oder die Fettsäurealkylester in einer Menge von 50-99 Gew.-% und das Tensid in einer Menge von 0,1 bis 10 Gew.-% enthalten sind, 0,1-10 Gew.-% Paraffinöl enthalten sind, 0,1-10 Gew.-% Wachs enthalten sind, der oder die Emulgatoren in einer Menge von 0,1 bis 5 Gew.% enthalten sind, wobei der oder die Emulgatoren nichtionische Tenside sind und/oder wobei der oder die Emulgatoren Fettalkohole, Fettalkoholethoxylate, Alkylpolyglycolether, Sorbitanfettsäureester, Polyglycerin(poly)fettsäureester, Fettsäuremono- und -diglyceride oder Bienenwachs sind und 0,05-5 Gew.-% eines oder mehrerer suspensionsstabilisierenden Mittel enthalten sind, jeweils bezogen auf die Gesamtzusammensetzung.

Die Aufgabe wird außerdem durch ein Verfahren zur Herstellung der flüssigen Zusammensetzung gelöst, umfassend Vermengen der Ingredienzien zu einer Mischung und Feinvermahlen der erhaltenen Mischung. Die Aufgabe wird auch gelöst durch ein Verfahren zur Behandlung von Tierställen, umfassend das Aufbringen der flüssigen Zusammensetzung auf Oberflächen des Tierstalls sowie durch die Verwendung der flüssigen Zusammensetzung zur Anwendung im Tierstall.

Es hat sich nämlich überraschender Weise gezeigt, dass bei Verwendung dieser Zusammensetzung eine Aufwandmenge (bezogen auf PPDA) von 0,1 bis 25 mg pro m² pro Tag Stallfläche ausreichend ist, um Emissionen zu reduzieren, und damit gegenüber dem reinen PPDA deutlich verringert wird. Dies war aufgrund der Modelluntersuchungen nicht vorauszusehen.

PPDA ist im Vergleich zu anderen bekannten Ureaseinhibitoren nur ein Wirkstoff mit mittlerer Wirksamkeit, deswegen war es nicht zu erwarten, dass die erfindungsgemäßen Zusammensetzungen entgegen dem Stand der Technik schon mit solch geringen Aufwandmengen auskommen, um eine sehr gute Minderung der Ammoniakemissionen zu garantieren.

Zur wirksamen Reduzierung von Ammoniakemissionen und zur ausreichenden Stickstoffstabilisierung des Flüssigmists/ der Gülle ist ein PPDA-Anteil in den erfindungsgemäßen Zusammensetzungen von 0,5-25 Gew.-%, bezogen auf die Gesamtzusammensetzung, bevorzugt. In Frage kommen daher auch 0,5-20 Gew.-%, 0,5-15 Gew.-%, 0,5-10 Gew.-%, 0,5-30 Gew.-%, 5-30 Gew.-%, 10-30 Gew.-% und 20-30 Gew.-%, bezogen auf die Gesamtzusammensetzung. Dabei spielt es keine Rolle, ob der Ureaseinhibitor im Formulierungsmittel gelöst oder ungelöst ist.

Die erfindungsgemäßen Dispersionsmedien sind darüber hinaus äußerst kostengünstig verfügbar und toxikologisch unbedenklich.

In einer bevorzugten Ausführungsform in Kombination mit einer der oben oder unten genannten Ausführungsformen eignen sich als Pflanzenöle z. B. Rapsöl, Sonnenblumenöl, Sojaöl, Leinöl oder Olivenöl und als Fettsäurealkylester z. B. Rapsmethylester, Sonnenblumenölmethylester, Sojaölmethylester oder Palmölmethylester, vorzugsweise in einer Menge von 50-99 Gew.-%, bezogen auf die Gesamtzusammensetzung, ohne darauf beschränkt zu sein.

Zur Vermeidung oder Verzögerung des Absetzens des PPDA in den erfindungsgemäß als Dispersionsmedium verwendeten Pflanzenölen und Fettsäurealkylestern können in einer bevorzugten Ausführungsform in Kombination mit einer der oben oder unten genannten Ausführungsformen Tenside eingesetzt werden.

Als besonders bevorzugt haben sich anionische Tenside, wie z. B. C8-C18-Alkylsulfate, C8-C18-Alkylsulfonate, C8-C18-Alkylbenzolsulfonate oder C8-C18-Alkylcarboxylate, vorzugsweise in einer Menge von 0,1-10 Gew.-%, bezogen auf die Gesamtzusammensetzung, erwiesen, ohne darauf beschränkt zu sein.

Obwohl aufgrund der geringeren Viskosität von Rapsmethylester der suspendierte Wirkstoff schneller als in einem Pflanzenöl sedimentiert, waren die Wirkstoffsuspensionen in Rapsmethylester mit Tensidzusatz sogar noch entmischungsstabiler als die Pflanzenölsuspensionen.

Zur besseren Vermischung der Zusammensetzung sowie zur Vermeidung des Absetzens von PPDA im erfindungsgemäßen Formulierungsmittel können in einer weiteren bevorzugten Ausführungsform in Kombination mit einer der oben oder unten genannten Ausführungsformen Emulgatoren eingesetzt werden. Als besonders bevorzugt haben sich dabei nichtionische Tenside, vorzugsweise in einer Menge von 0,1-5 Gew.-%, bezogen auf die Gesamtzusammensetzung, erwiesen, ohne jedoch auf diese beschränkt zu sein. Beispiele für nichtionische Tenside sind Fettalkohole, Fettalkoholethoxylate, Alkylpolyglycolether, Sorbitanfettsäureester, Poly-glycerin(poly)fettsäureester, Fettsäuremono- und -diglyceride sowie Bienenwachs.

Zur Steigerung der Entmischungsstabilität der Zusammensetzung sowie zur Vermeidung des Absetzens von PPDA im erfindungsgemäßen Formulierungsmittel können in einer weiteren bevorzugten Ausführungsform in Kombination mit einer der oben oder unten genannten Ausführungsformen suspensionsstabilisierende Mittel eingesetzt werden. Als besonders bevorzugt haben sich diese vorzugsweise in einer Menge von 0,05-5 Gew.-%, bezogen auf die Gesamtzusammensetzung, erwiesen, ohne jedoch auf diese beschränkt zu sein. Die suspensionsstabilisierenden Mittel sind insbesondere ausgewählt aus der Gruppe bestehend aus Polyvinylalkoholen, Polyvinylpyrrolidonen, Xanthan, Dextran, Tylose, Carboxymethylcellulose, Ethylcellulose, Methylcellulose, Hydroxyethylcellulose, Hydroxyethylmethylcellulose, Methylethylcellulose.

Als Paraffinöl eignen sich vorzugsweise technische oder medizinische Weißöle mit einem Erstarrungspunkt unter 5°C. Ein Anteil von 0,1-10 Gew.-% Paraffinöl in der erfindungsgemäßen Zusammensetzung ist besonders bevorzugt, ohne auf diesen Bereich beschränkt zu sein.

Als Wachse eignen sich bevorzugt organische Verbindungen, die bei über etwa 40 °C schmelzen und dann eine Flüssigkeit niedriger Viskosität bilden. Dazu zählen natürliche Wachse, teilsynthetische Wachse und synthetische Wachse. Zu den natürlichen Wachsen gehören tierische Wachse, pflanzliche Wachse und mineralische bzw. fossile Wachse. Natürlich sind unter dem Oberbegriff auch Wachsgemische gemeint. Ein Anteil von 0,1-10 Gew.-% Wachs in der erfindungsgemäßen Zusammensetzung ist besonders bevorzugt, ohne auf diesen Bereich beschränkt zu sein.

Die erfindungsgemäße Zusammensetzung kann PPDA als Metallkomplex enthalten. Bevorzut sind dabei Übergangsmetallkomplexe von PPDA, besonders bevorzugt Übergangsmetallkomplexe mit Metallen aus der 6. bis 12. Gruppe, insbesondere Mo, Mn, Fe, Co, Ni, Cu und Zn-Komplexe.

In einer bevorzugten Ausführungsform in Kombination mit einer der oben oder unten genannten Ausführungsformen enthält die erfindungsgemäße Zusammensetzung PPDA in einer Menge von 0,5-30 Gew.-%, das oder die Öle und/oder die Fettsäurealkylester in einer Menge von 50-99 Gew.-% und das Tensid in einer Menge von 0,1-10 Gew.-%, jeweils bezogen auf die Gesamtzusammensetzung. In einer weiteren bevorzugten Ausführungsform in Kombination mit einer der oben oder unten genannten Ausführungsformen umfasst die erfindungsgemäße Zusammensetzung vorzugsweise PPDA als Ureaseinhibitor, Rapsöl oder Rapsmethylester, Wasser und Natriumdodecylsulfat. In einer besonders bevorzugten Ausführungsform in Kombination mit einer der oben oder unten genannten Ausführungsformen enthält die erfindungsgemäße flüssige Zusammensetzung PPDA in einer Menge von 0,5-25 Gew.-%, Rapsöl oder Rapsmethylester in einer Menge von 50-99 Gew.-% sowie Natriumdodecylsulfat in einer Menge von 0,1-5 Gew.-%, jeweils bezogen auf die Gesamtzusammensetzung.

Der Ureaseinhibitor PPDA, der chemisch sehr polar ist, weist in den erfindungsgemäßen unpolaren Ölen eine ausgezeichnete Stabilität auf. Da PPDA weitgehend in der erfindungsgemäßen Zusammensetzung unlöslich ist, werden gegenüber Flüssigformulierungen mit gelösten Wirkstoffen mögliche Stabilitätsprobleme zusätzlich reduziert.

Es hat sich weiterhin überraschenderweise gezeigt, dass sich die Suspensionen deutlich langsamer entmischen, wenn sie nach der Vermengung der Inhaltsstoffe feinvermahlen werden. Somit ist die Entmischung durch das erfindungsgemäße Verfahren deutlich gehemmt.

Zum Vermahlen können die üblichen, dem Fachmann bekannten, Techniken angewandt werden. Zum Beispiel können in einer bevorzugten Ausführungsform in Kombination mit einer der oben oder unten genannten Ausführungsformen die Suspensionen, ohne dass die Erfindung auf die folgend genannten Vermahlungstechniken beschränkt ist, mit einem Dissolver, einem Ultraturrax oder einer Kolloidmühle vermahlen werden. Anstelle eines Ultraturrax kann auch jeder andere beliebige Dispergierer verwendet werden.

In DE 10 2013 012 760 werden Pflanzenöle, Fettsäurealkylester sowie ein Gemisch aus Paraffinölen und/oder Glycolderivaten, optional mit Wasser, als Dispersionsmedien für Phosphorsäureamidderivate beschrieben. Die resultierenden Zusammensetzungen sollen sich zur Behandlung von festen Harnstoffdüngemitteln eignen. Die Anmeldung beansprucht auch Mischungen mit PPDA, die jedoch nicht durch praktische Beispiele belegt werden

Es wird beschrieben, dass diese flüssigen Zusammensetzungen generell stabil und entmischungsgehemmt seien. Untersuchungen mit PPDA haben aber gezeigt, dass diese Mischungen so nicht stabil und entmischungsgehemmt sind.

Ist in der Zusammensetzung Wasser zugegen, ist die Formulierung zwar entmischungsstabil, der Wirkstoff PPDA wird aber in kurzer Zeit hydrolysiert. Wenn die Zusammensetzung kein Wasser enthält, ist der Wirkstoff stabil, aber die Suspension entmischt sich schnell und stark. Der Wirkstoff sinkt sehr kompakt nach unten.

Es hat sich bei der erfindungsgemäßen Zusammensetzung mit dem oben beschriebenen Verfahren gezeigt, dass die Zusammensetzung stark entmischungsgehemmt ist und gleichzeitig der Wirkstoff über eine lange Zeit in der erfindungsgemäßen Zusammensetzung sehr stabil ist.

Die erfindungsgemäßen Zusammensetzungen sind nicht nur äußerst lagerstabil, sondern auch sehr gut für die Verwendung im Tierstall mit Wasser verdünnbar. Dies war so auch nicht zu erwarten, da die ölbasierten Dispersionsmedien nicht mit Wasser mischbar sind.

Weiterhin hat sich gezeigt, dass PPDA in den meisten Lösungsmitteln, die generell als gute Lösungsmittel für Phosphorsäureamide bekannt sind, nicht gut löslich ist (< 1 %) oder sich schon nach kurzer Lagerzeit ein starker Wirkstoffabbau einstellt.

Umso überraschender war es deswegen, dass mit einem oder mehreren Lösungsmittel(n), ausgewählt aus den folgenden: Dimethylsulfoxid, Pyrrolidin-2-on, Glycerinformal, Ethylenglykole und ihre Mono-/Diether, Propylenglykole und ihre Mono-/Diether, Solventia gefunden wurden, in denen sich PPDA in einer anwendungstauglichen Menge löst und in denen dieser Wirkstoff auch stabil ist.

In einer bevorzugten Ausführungsform in Kombination mit einer der oben oder unten genannten Ausführungsformen enthält die erfindungsgemäße Zusammensetzung PPDA als Ureaseinhibitor und ein oder mehrere Lösungsmittel, ausgewählt aus den folgenden: Dimethylsulfoxid, Pyrrolidin-2-on, Glycerinformal, Ethylenglykole und ihre Mono-/Diether, Propylenglykole und ihre Mono-/Diether.

In einer besonders bevorzugten Ausführungsform in Kombination mit einer der oben oder unten genannten Ausführungsformen enthält die erfindungsgemäße Zusammensetzung PPDA als Ureaseinhibitor in einer Menge von 0,5 - 12 Gew.-% und ein oder mehrere Lösungsmittel, ausgewählt aus den folgenden: Dimethylsulfoxid, Pyrrolidin-2-on, Glycerinformal, Ethylenglykole und ihre Mono-/Diether, Propylenglykole und ihre Mono-/Diether, in einer Menge von 88 - 99,5 Gew.-%, bezogen auf die Gesamtzusammensetzung.

Es hat sich außerdem gezeigt, dass die erfindungsgemäßen Zusammensetzungen sich hervorragend für die Anwendung im Tierstall, auf Tierexkrementen oder in Flüssigmist/Gülle eignen, da sie einfach mit Wasser verdünnbar sind. Der gesamte Wirkstoff wird dann im Wasser gefunden und steht somit gänzlich für die Reduktion von Ammoniakemissionen und zur Stabilisierung von wertvollen Inhaltsstoffen von Tierexkrementen zur Verfügung. Vorzugsweise wird die erfindungsgemäße Zusammensetzung zur Vorortbehandlung von Tierstallflächen und/oder flüssigen, halbflüssigen oder festen Materialien aus dem Tierstall verwendet.

In einer besonders bevorzugten Ausführungsform in Kombination mit einer der oben oder unten genannten Ausführungsformen werden die erfindungsgemäßen Zusammensetzungen so mit Wasser verdünnt und auf den Stallboden ausgebracht, so dass Ureaseinhibitormengen von 0,1 - 25 mg/m² pro Tag erzielt werden.

Die vorliegende Erfindung soll nun anhand der folgenden Beispiele ohne Beschränkung und somit lediglich zur Veranschaulichung erläutert werden.

### Beispiele

In den folgenden Beispielen bedeuten:
- RME:: Rapsmethylester
- RÖ:: Rapsöl
- SDS:: Natriumdodecylsulfat
- DMSO:: Dimethylsulfoxid

### Beispiel 1: Wirkstoffsuspensionen mit verzögerter Sedimentation

Zur Feststellung der Sedimentationsgeschwindigkeit des Ureaseinhibitors PPDA in verschiedenen Mischungen wurde die Wirkstoffdispersion hergestellt, indem Komponente 1 vorgelegt wurde und unter Rühren das Tensid gefolgt von PPDA (wobei diese Reihenfolge auch vertauscht werden kann) einsuspendiert wurde. Die erhaltene Mischung wurde 2 min mittels einer Dispergiermaschine bei 10.000 min⁻¹ homogenisiert. Das Absetzverhalten wurde mit einer Note von 0 bis 5 (keine Sedimentation bis vollständige Sedimentation des Wirkstoffes) visuell bewertet.

| **Nr.** | **Komponente 1** | | **Tensid** | | **PPDA** | **Sedimentation nach 2 Monaten** |
|---|---|---|---|---|---|---|
| | **Name** | **[%]** | **Name** | **[%]** | **[%]** | |
| 1 | RME | 78,9% | SDS | 5,3% | 16% | 2 |
| 2 | RÖ | 80,0% | Calciumstearat | 4,0% | 16% | 3 |
| 3 | RME | 83,3% | SDS | 4,2% | 12,5% | 2 |
| 4 | RME | 85,1% | SDS | 4,3% | 10,6% | 2 |
| 5 | RME | 87,0% | SDS | 4,3% | 8,7% | 2-3 |
| 6 | RME | 88,9% | SDS | 4,4% | 6,7% | 2 |
| 7 | RME | 90,9% | SDS | 4,5% | 4,5% | 2 |
| 8 | RME | 93,0% | SDS | 4,7% | 2,3% | 1 |
| 9 | RME | 84,2% | SDS | 3,2% | 12,6% | 2-3 |
| 10 | RME | 86,0% | SDS | 3,2% | 10,8% | 2-3 |
| 11 | RME | 87,9% | SDS | 3,3% | 8,8% | 2-3 |
| 12 | RME | 89,9% | SDS | 3,4% | 6,7% | 2 |
| 13 | RME | 92,0% | SDS | 3,4% | 4,6% | 1 |
| 14 | RME | 94,1% | SDS | 3,5% | 2,4% | 2 |
| 15 | RME | 85,1% | SDS | 2,1% | 12,8% | 2 |
| 16 | RME | 87,0% | SDS | 2,2% | 10,9% | 2 |
| 17 | RME | 88,9% | SDS | 2,2% | 8,9% | 2 |
| 18 | RME | 90,9% | SDS | 2,3% | 6,8% | 1 |
| 19 | RME | 93,0% | SDS | 2,3% | 4,7% | 0-1 |
| 20 | RME | 95,2% | SDS | 2,4% | 2,4% | 1 |
| 21 | RME | 86,0% | SDS | 1,1% | 12,9% | 3 |
| 22 | RME | 87,9% | SDS | 1,1% | 11,0% | 3 |
| 23 | RME | 89,9% | SDS | 1,1% | 9,0% | 2 |
| 24 | RME | 92,0% | SDS | 1,1% | 6,9% | 2 |
| 25 | RME | 94,1% | SDS | 1,2% | 4,7% | 2 |
| 26 | RME | 96,4% | SDS | 1,2% | 2,4% | 2 |
| 27 | RME | 94,1% | SDS | 0,9% | 5,0% | 2 |
| 28 | RME | 96,6% | SDS | 0,9% | 2,5% | 2 |
| 29 | RME | 97,6 | / | / | 2,4 % | 5 |
| 30 | RÖ | 97,5 | / | / | 2,5 % | 5 |

### Beispiel 2: Wirkstoffstabilität in der Suspension

Die Suspensionen, ausgewählt aus Beispiel 1, wurden bei Raumtemperatur gelagert und der Wirkstoffgehalt (PPDA) nach 6 Monaten mittels HPLC überprüft.

| **Nr.** | **Komponente 1** | | **Tensid** | | **PPDA** | **Wirkstoffwiederfindung nach 6 Monaten** |
|---|---|---|---|---|---|---|
| | **Name** | **[%]** | **Name** | **[%]** | **[%]** | |
| 1 | RME | 78,9% | SDS | 5,3% | 16% | 96 % |
| 2 | RÖ | 80,0% | Calciumstearat | 4,0% | 16% | 95 % |
| 3 | RME | 83,3% | SDS | 4,2% | 12,5% | 99 % |
| 5 | RME | 87,0% | SDS | 4,3% | 8,7% | 98 % |
| 8 | RME | 93,0% | SDS | 4,7% | 2,3% | 91 % |
| 15 | RME | 85,1% | SDS | 2,1% | 12,8% | 100 % |
| 17 | RME | 88,9% | SDS | 2,2% | 8,9% | 97 % |
| 19 | RME | 93,0% | SDS | 2,3% | 4,7% | 94 % |
| 21 | RME | 86,0% | SDS | 1,1% | 12,9% | 100 % |
| 24 | RME | 92,0% | SDS | 1,1% | 6,9% | 97 % |
| 25 | RME | 94,1% | SDS | 1,2% | 4,7% | 94 % |
| 27 | RME | 94,1% | SDS | 0,9% | 5,0% | 99 % |
| 28 | RME | 96,6% | SDS | 0,9% | 2,5% | 96 % |

### Beispiel 3: Herstellung einer Suspension

In einem 1000 ml Schraubglas werden bei Raumtemperatur 410 g Rapsöl vorgelegt. Unter Rühren werden zuerst 3,8 g Natriumdodecylsulfat und anschließend 10,6 g PPDA einsuspendiert. Die Mischung wird noch 10 Minuten gerührt und anschließend eine Minute mit einem IKA Ultraturrax T10 mit Werkzeug S 18 N - 19 G bei 10000 min⁻¹ dispergiert.

### Beispiel 4: Herstellung einer Suspension

In einem 1000 ml Schraubglas werden bei Raumtemperatur 410 g Rapsöl vorgelegt. Unter Rühren werden zuerst 3,8 g Natriumdodecylsulfat und anschließend 10,6 g PPDA einsuspendiert. Die Mischung wird noch 10 Minuten gerührt und anschließend 3 mal in einer IKA magic LAB mit aufgesetztem Modul Kolloidmühle MK mit einem Mahlspalt von 160 µm vermahlen.

### Beispiel 5: Herstellung einer Suspension

In einem 30 I Hängegefäß mit eingesetztem Schrägblattrührer mit Riemenantrieb werden 18,82 kg Rapsöl vorgelegt. Unter Rühren werden bei Raumtemperatur 180 g Natriumdodecylsulfat einsuspendiert und 5 Minuten gerührt. Anschließend werden über einen Zeitraum von 10 Minuten 1000 g PPDA hinzugegeben. Die resultierende Mischung wird alsdann noch 2 Stunden gerührt und dann auf drei 10 I Eimer aufgeteilt. Die Mischung in jedem Eimer wird abschließend jeweils 5 Minuten IKA Ultraturrax T50 mit Werkzeug S 50 N - G 45 M bei 10000 min⁻¹ dispergiert. Nachfolgend werden die drei Chargen in einem 25 I Kanister vereinigt.

### Beispiel 6: maximale Löslichkeiten und Wirkstoffstabilität in der Lösung (Raumtemperatur)

PPDA wurde bis zur maximalen Löslichkeit in die Lösungsmittel/ Lösungsmittelgemische eingebracht, die Lösungen wurden bei Raumtemperatur gelagert und der Wirkstoffgehalt (PPDA) nach 48 Wochen mittels HPLC überprüft.

| **Lösungsmittel (-kombination)** | **Anteil LM 1** | **Löslichkeit** | **Wirkstoffwiederfindung nach 48 Wochen** |
|---|---|---|---|
| Propylenglycol monomethylether / Glycerinformal | 20 % | 2,8 % | 93 % |
| | 40 % | 2,7 % | 100 % |
| | 60 % | 2,2 % | 100 % |
| | 80 % | 1,5 % | 100 % |
| Propylenglycol monomethylether / Pyrrolidon | 40 % | 3,7 % | 100 % |
| | 60 % | 2,9 % | 100 % |
| | 80 % | 1,1 % | 100 % |
| Diethylenenglycolmonomethylether / Glycerinformal | 20 % | 3,9 % | 85 % |
| | 40 % | 3,3 % | 89 % |
| | 60 % | 3,1 % | 72 % |
| | 80 % | 2,6 % | 73 % |
| Pyrrolidon / Glycerinformal | 20 % | 4,3 % | 72 % |
| Tetraethylenglycol / Pyrrolidon | 40 % | 5,5 % | 87 % |
| | 60 % | 3,6 % | 76 % |
| DMSO | | 11,5 % | 81 % |
| DMSO/Pyrrolidon | 20 % | 6,0 % | 79 % |
| | 40 % | 8,4 % | 88 % |
| | 60 % | 9,9 % | 93 % |
| | 80 % | 12,0 % | 92 % |
| DMSO/Glycerinformal | 20 % | 4,1 % | 82 % |
| | 40 % | 4,9 % | 91 % |
| | 60 % | 6,7 % | 92 % |
| | 80 % | 10,3 % | 86 % |
| DMSO/Propylenglycolmonomethyl ether | 20 % | 2,2 % | 100 % |
| | 40 % | 3,5 % | 100 % |
| | 60 % | 6,2 % | 95 % |
| | 80 % | 10,7 % | 89 % |
| DMSO/Diethylenglycolmonomethylether | 20 % | 3,0 % | 83 % |
| | 40 % | 4,4 % | 85 % |
| | 60 % | 7,8 % | 93 % |
| | 80 % | 11,5 % | 80 % |

### Beispiel 7: Anwendung der erfindungsgemäßen Mischungen

5,32 g einer Mischung aus Beispiel 1, Nr. 25, oder die gesättigte Lösung von PPDA in einer Kombination aus 40 % DMSO und 60 % Glycerinformal aus Beispiel 6, werden bei Raumtemperatur in 10 l Wasser gelöst und 15 Minuten intensiv gerührt. Diese Mischung wird mit z. B. einer Pflanzenschutzspritze mit installierter Flachstrahldüse (z. B. Lechler AD120-04) auf 100 m² frisch abgeschobenem Stallboden ausgebracht. Alternativ kann auch ein Spaltenabschieberoboter mit Wassersprühvorrichtung (z. B. Lely Discovery 90 S/SW) oder einem Abschieberoboter für planbefestigte Böden mit Wassersprüheinrichtung (z. B. Lely Discovery 120 Collector) eingesetzt werden. Die gesamte Menge an Wirkstoff konnte in einer Referenzprobe in der wässrigen Phase nachgewiesen werden.

Zusammenfassend ist festzustellen, dass die Sedimentation von PPDA in der erfindungsgemäßen flüssigen Zusammensetzung verringert wurde (Beispiel 1). Ferner wurde in Beispiel 2 gezeigt, dass der Wirkstoff (PPDA) stabil ist und nicht abgebaut wird und auch nach 6 Monaten noch in mindestens 91% enthalten ist. Beispiel 6 zeigt ebenfalls die Wirkstoffstabilität der erfindungsgemäßen flüssigen Zusammensetzung. In Beispiel 7 wurde zudem gezeigt, dass die gesamte Menge an Wirkstoff der erfindungsgemäßen flüssigen Zusammensetzung im Wasser gefunden wurde und somit vollständig für die Reduktion von Ammoniakemissionen und zur Stabilisierung von wertvollen Inhaltsstoffen von Tierexkrementen zur Verfügung steht. Dies ermöglicht den Einsatz einer geringen Wirkstoffmenge, um den gewünschten Effekt zu erreichen.

## Patentansprüche

1. Flüssige Zusammensetzung, enthaltend Phenylphosphorsäurediamid der Struktur: 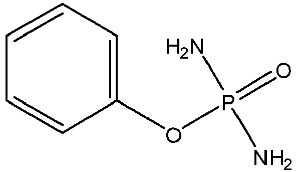 einschließlich Salze, Tautomere, Polymorphe und Metallkomplexe der Verbindung dieser Formel, die ureaseinhibierende Wirkung haben; mindestens ein Dispersionsmedium, ausgewählt unter:
a) Pflanzenölen,
b) Fettsäurealkylestern,
c) einem oder mehreren Lösungsmittel(n), ausgewählt aus den folgenden: Dimethylsulfoxid, Pyrrolidin-2-on, Glycerinformal, Ethylenglykole und ihre Mono-/Diether, Propylenglykole und ihre Mono-/Diether,
sowie eine oder mehrere aus der folgenden Gruppe ausgewählte Komponente(n): Paraffinöle, Wachse, Tenside, Emulgatoren, ein oder mehrere suspensionsstabilisierende Mittel; wobei das suspensionsstabilisierende Mittel ausgewählt ist aus der Gruppe bestehend aus Polyvinylalkoholen, Polyvinylpyrrolidonen, Xanthan, Dextran, Tylose, Carboxymethylcellulose, Ethylcellulose, Methylcellulose, Hydroxyethylcellulose, Hydroxyethylmethylcellulose und Methylethylcellulose,
wobei das Phenylphosphorsäurediamid in einer Menge von 0,5-30 Gew.-%,
das oder die Öle und/oder die Fettsäurealkylester in einer Menge von 50-99 Gew.-% und
das Tensid in einer Menge von 0,1 bis 10 Gew.-% enthalten sind,
0,1-10 Gew.-% Paraffinöl enthalten sind,
0,1-10 Gew.-% Wachs enthalten sind,
der oder die Emulgatoren in einer Menge von 0,1 bis 5 Gew.% enthalten sind, wobei der oder die Emulgatoren nichtionische Tenside sind und/oder wobei der oder die Emulgatoren Fettalkohole, Fettalkoholethoxylate, Alkylpolyglycolether, Sorbitanfettsäureester, Polyglycerin(poly)fettsäureester, Fettsäuremono- und -diglyceride oder Bienenwachs sind und 0,05-5 Gew.-% eines oder mehrerer suspensionsstabilisierenden Mittel enthalten sind, jeweils bezogen auf die Gesamtzusammensetzung.

2. Flüssige Zusammensetzung nach Anspruch 1, **dadurch gekennzeichnet, dass** das Pflanzenöl unter Rapsöl, Sonnenblumenöl, Sojaöl, Leinöl oder Olivenöl ausgewählt ist und/oder der Fettsäurealkylester Rapsmethylester, Sonnenblumenölmethylester, Sojaölmethylester oder Palmölmethylester ist.

3. Flüssige Zusammensetzung nach den Ansprüchen 1 oder 2, wobei das Tensid ein C8-C18-Alkylsulfat, ein C8-C18-Alkylsulfonat, ein C8-C18-Alkylbenzolsulfonat oder ein C8-C18-Alkylcarboxylat oder ein entsprechendes Salz davon ist.

4. Flüssige Zusammensetzung nach einem der Ansprüche 1 bis 3, umfassend Phenylphosphorsäurediamid als Ureaseinhibitor, Rapsöl oder Rapsmethylester, Wasser und Natriumdodecylsulfat, vorzugsweise **dadurch gekennzeichnet, dass** Phenylphosphorsäurediamid in einer Menge von 0,5-25 Gew.-%, Rapsöl oder Rapsmethylester in einer Menge von 50-99 Gew.-% sowie Natriumdodecylsulfat in einer Menge von 0,1-5 Gew.-%, jeweils bezogen auf die Gesamtzusammensetzung, enthalten ist.

5. Flüssige Zusammensetzung nach Anspruch 1, bestehend aus Phenylphosphorsäurediamid als Ureaseinhibitor und einem oder mehreren Lösungsmittel(n), ausgewählt aus den folgenden: Dimethylsulfoxid, Pyrrolidin-2-on, Glycerinformal, Ethylenglykole und ihre Mono-/Diether, Propylenglykole und ihre Mono-/Diether, vorzugsweise **dadurch gekennzeichnet, dass** Phenylphosphorsäurediamid in einer Menge von 0,5 - 12 Gew.-%, bezogen auf die Gesamtzusammensetzung enthalten ist.

6. Verfahren zur Herstellung einer flüssigen Zusammensetzung nach einem der Ansprüche 1 bis 5, umfassend das Vermengen der Ingredienzien zu einer Mischung und Feinvermahlen der erhaltenen Mischung, vorzugsweise **dadurch gekennzeichnet, dass** die Feinvermahlung mittels einem Dissolver, einen Dispergierer oder einer Kolloidmühle durchgeführt wird.

7. Verfahren zur Behandlung von Tierställen, umfassend das Aufbringen der flüssigen Zusammensetzung nach einem der Ansprüche 1 bis 5 auf Oberflächen des Tierstalls.

8. Verwendung der flüssigen Zusammensetzung nach einem der Ansprüche 1 bis 5 zur Anwendung im Tierstall, vorzugsweise zur Vorortbehandlung von Tierstallflächen und/oder flüssigen, halbflüssigen oder festen Materialien aus dem Tierstall.

9. Verfahren nach Anspruch 7 oder Verwendung nach Anspruch 8, **dadurch gekennzeichnet, dass** die flüssige Zusammensetzung mit Wasser verdünnt auf den Stallboden ausgebracht wird, so dass Ureaseinhibitormengen von 0,1 - 25 mg/m² pro Tag erzielt werden.

## Claims

1. Liquid composition comprising phenyl phosphorodiamidate of the structure: 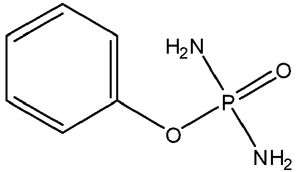 including salts, tautomers, polymorphs and metal complexes of the compound of said formula, which have urease inhibiting activity; at least one dispersion medium selected from:
a) vegetable oils
b) fatty acid alkyl esters,
c) one or more solvents selected from the following: dimethyl sulfoxide, pyrrolidin-2-one, glycerol formal, ethylene glycols and their mono/diethers, propylene glycols and their mono/diethers,
and one or more components selected from the group consisting of: paraffin oils, waxes, surfactants, emulsifiers, one or more suspension stabilizing agents; wherein the suspension stabilizing agent is selected from the group consisting of polyvinyl alcohols, polyvinylpyrrolidones, xanthan gum, dextran, tylose, carboxymethylcellulose, ethylcellulose, methylcellulose, hydroxyethylcellulose, hydroxyethylmethylcellulose and methylethylcellulose,
wherein the phenyl phosphorodiamidate is present in an amount of 0.5-30% by weight,
the oil(s) and/or fatty acid alkyl ester(s) are present in an amount of 50-99% by weight, and
the surfactant is present in an amount of 0.1-10% by weight,
0.1-10% by weight of kerosene oil are present,
0.1-10% by weight of wax are present,
the emulsifier(s) are present in an amount of 0.1-5% by weight, wherein the emulsifier(s) are nonionic surfactants and/or wherein the emulsifier(s) are fatty alcohols, fatty alcohol ethoxylates, alkyl polyglycol ethers, sorbitan fatty acid esters, polyglycerol esters of (poly) fatty acids, mono- and diglycerides of fatty acid or beeswax, and
0.05-5% by weight of one or more suspension stabilizing agents are present,
in each case based on the total composition.

2. Liquid composition according to claim 1, **characterized in that** the vegetable oil is selected from rapeseed oil, sunflower oil, soybean oil, linseed oil or olive oil and/or the fatty acid alkyl ester is rapeseed methyl ester, sunflower oil methyl ester, soybean oil methyl ester or palm oil methyl ester.

3. Liquid composition according to claims 1 or 2, wherein the surfactant is a C8-C18 alkyl sulfate, a C8-C18 alkyl sulfonate, a C8-C18 alkyl benzene sulfonate or a C8-C18 alkyl carboxylate or a corresponding salt thereof.

4. Liquid composition according to any one of claims 1 to 3, comprising phenyl phosphorodiamidate as urease inhibitor, rapeseed oil or rapeseed methyl ester, water and sodium dodecyl sulfate, preferably **characterized in that** phenyl phosphorodiamidate is present in an amount of 0.5-25% by weight, rapeseed oil or rapeseed methyl ester in an amount of 50-99% by weight, and sodium dodecyl sulfate in an amount of 0.1-5% by weight, each based on the total composition.

5. Liquid composition according to claim 1, consisting of phenyl phosphorodiamidate as urease inhibitor and one or more solvent(s) selected from the following: dimethyl sulfoxide, pyrrolidin-2-one, glycerol formal, ethylene glycols and their mono/diethers, propylene glycols and their mono/diethers, preferably **characterized in that** phenyl phosphorodiamidate is present in an amount of 0.5-12% by weight based on the total composition.

6. Process for the preparation of a liquid composition according to any one of claims 1 to 5, comprising mixing the ingredients to a mixture and fine grinding the obtained mixture, preferably **characterized in that** the fine grinding is carried out by means of a dissolver, a disperser or a colloid mill.

7. Method of treating animal stables, comprising applying the liquid composition according to any one of claims 1 to 5 to surfaces of the animal stable.

8. Use of the liquid composition according to any one of claims 1 to 5 for application in animal stable, preferably for on-site treatment of animal stable surfaces and/or liquid, semi-liquid or solid materials from the animal stable.

9. Method according to claim 7 or use according to claim 8, **characterized in that** the liquid composition is applied to the stable floor diluted with water so that urease inhibitor amounts of 0.1-25 mg/m² per day are obtained.

## Revendications

1. Composition liquide contenant du diamide d'acide phénylphosphorique présentant la structure : 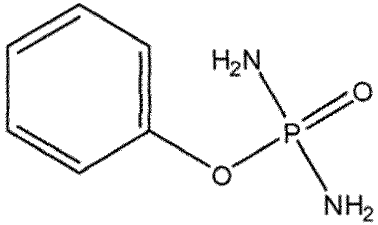
y compris des sels, des tautomères, des polymorphes et des complexes métalliques du composé de ladite formule qui présentent une activité d'inhibition de l'uréase ; au moins un milieu de dispersion choisi parmi :
a) des huiles végétales ;
(b) des esters alkyliques d'acides gras ;
(c) un ou plusieurs solvant(s) choisi(s) parmi ceux figurant ci-dessous :
diméthylsulfoxyde, pyrrolidin-2-one, glycérol formai, éthylèneglycols et leurs mono-/diéthers, propylèneglycols et leurs mono-/diéthers,
et un ou plusieurs composant(s) choisi(s) parmi le groupe ci-dessous : huiles de paraffine, cires, tensioactifs, émulsifiants, un ou plusieurs agent(s) de stabilisation de suspension ; dans laquelle l'agent de stabilisation de suspension est choisi parmi le groupe constitué par les alcools polyvinyliques, les polyvinylpyrrolidones, le xanthane, le dextrane, le tylose, la carboxyméthylcellulose, l'éthylcellulose, la méthylcellulose, l'hydroxyéthylcellulose, l'hydroxyéthylméthylcellulose et la méthyléthylcellulose,
dans laquelle le diamide d'acide phénylphosphorique est présent en une quantité comprise entre 0,5 et 30 % en poids,
l'huile ou les huiles et/ou les esters alkyliques d'acides gras est/sont présent(s) en une quantité comprise entre 50 et 99 % en poids ; et
le tensioactif est présent en une quantité comprise entre 0,1 et 10 % en poids,
l'huile de paraffine est présente en une quantité comprise entre 0,1 et 10 % en poids, la cire est présente en une quantité comprise entre 0,1 et 10 % en poids,
le ou les émulsifiant(s) est/sont présent(s) en une quantité comprise entre 0,1 et 5 % en poids, dans laquelle le ou les émulsifiant(s) est/sont des tensioactifs non ioniques et/ou dans laquelle le ou les émulsifiant(s) est/sont des alcools gras, des éthoxylates d'alcools gras, des éthers alkylpolyglycoliques, des esters de sorbitol d'acides gras, des esters de polyglycérol de (poly)acides gras, des monoglycérides et diglycérides d'acides gras ou de la cire d'abeille et un ou plusieurs agent(s) de stabilisation de suspension est/sont présent(s) en une quantité comprise entre 0,05 et 5 % en poids, respectivement par rapport à la composition totale.

2. Composition liquide selon la revendication 1, **caractérisée en ce que** l'huile végétale est choisie parmi l'huile de colza, l'huile de tournesol, l'huile de soja, l'huile de lin ou l'huile d'olive, et/ou l'ester alkylique d'acide gras est de l'ester méthylique d'huile de colza, de l'ester méthylique d'huile de tournesol, de l'ester méthylique d'huile de soja ou de l'ester méthylique d'huile de palme.

3. Composition liquide selon la revendication 1 ou 2, dans laquelle le tensioactif est un alkylsulfate en C8-C18, un alkylsulfonate en C8-C18, un alkylbenzènesulfonate en C8-C18 ou un alkylcarboxylate en C8-C18, ou un sel correspondant de ceux-ci.

4. Composition liquide selon l'une quelconque des revendications 1 à 3, comprenant du diamide d'acide phénylphosphorique en tant qu'inhibiteur d'uréase, de l'huile de colza ou de l'ester méthylique d'huile de colza, de l'eau et du dodécylsulfate de sodium, **caractérisée** de manière préférée en ce que le diamide d'acide phénylphosphorique est présent en une quantité comprise entre 0,5 et 25 % en poids, l'huile de colza ou l'ester méthylique d'huile de colza est présent en une quantité comprise entre 50 et 99 % en poids et le dodécylsulfate de sodium est présent en une quantité comprise entre 0,1 et 5 % en poids, respectivement par rapport à la composition totale.

5. Composition liquide selon la revendication 1, constituée de diamide d'acide phénylphosphorique en tant qu'inhibiteur d'uréase et d'un ou plusieurs solvant(s) choisi(s) parmi ceux figurant ci-dessous : diméthylsulfoxyde, pyrrolidin-2-one, glycérol formai, éthylèneglycols et leurs mono-/diéthers, propylèneglycols et leurs mono-/diéthers, **caractérisée** de manière préférée en ce que le diamide d'acide phénylphosphorique est présent en une quantité comprise entre 0,5 et 12 % en poids, par rapport à la composition totale.

6. Procédé de préparation d'une composition liquide selon l'une quelconque des revendications 1 à 5, comprenant le mélange des ingrédients pour obtenir un mélange et le broyage fin du mélange obtenu, **caractérisé en ce que** le broyage fin est mis en œuvre au moyen d'un dissolveur, d'un disperseur ou d'un broyeur colloïdal.

7. Procédé de traitement d'abris pour animaux, comprenant l'application de la composition liquide selon l'une quelconque des revendications 1 à 5 sur des surfaces des abris pour animaux.

8. Utilisation de la composition liquide selon l'une quelconque des revendications 1 à 5 en vue d'une application dans des abris pour animaux, de manière préférée en vue du prétraitement sur place de surfaces des abris pour animaux et/ou des matières liquides, semi-liquides ou solides issues des abris pour animaux.

9. Procédé selon la revendication 7 ou utilisation selon la revendication 8, **caractérisé en ce que** la composition liquide est appliquée diluée avec de l'eau sur le sol des abris, de sorte que des quantités d'inhibiteur d'uréase comprises entre 0,1 et 25 mg/m² par jour sont obtenues.
